# EUROPEAN PATENT APPLICATION

(11) **EP 3 659 928 A1**
(43) Date of publication of application: **03.06.2020**
(21) Application number: 18837672.7
(22) Date of filing: 28.06.2018
(51) Int. Cl.: B64F 1/00, B64F 1/26, E01F 8/00

(54) **DEVICE FOR DEFLECTING AND DECELERATING A FLOW**

(30) Priority: 25.07.2017 CO 17007390
(71) Applicant: Correa Escobar, Juan Felipe, Envigado 055427 (CO); Sierra Pérez, Julián, Envigado 055420 (CO)
(72) Inventor: Correa Escobar, Juan Felipe, Envigado 055427 (CO); Sierra Pérez, Julián, Envigado 055420 (CO)
(74) Representative: Temiño Ceniceros, Ignacio
(86) International application number: PCT/IB2018/054825
(87) International publication number: WO 2019/021084

(57) **Abstract**

The present invention corresponds to a device for deflecting and decelerating a flow comprising a deflecting surface, a support structure connected behind the deflecting surface and a vortex generator connected on the deflecting surface, where the vortex generator generates two turbulent flow zones, a first low pressure zone below the vortex generator and a second high pressure zone above the vortex generator, and where the deflecting surface is concave in the direction of the incident flow, and the vortex generator is on the concave part.

## Description

### Technical Field of the Invention

The present invention relates to barriers to decelerate a flow from a propellant assembly of an aircraft or other source, preferably barriers to divert the flow and decelerate it.

### Description of the state of the art

In the state of the technique there are different types of barriers, deflectors and vortex generators, such as those disclosed in US9416802B2 and US20160177914A1.

Document US9416802B2 discloses a vortex generator, specifically designed to be installed in aircraft, to soften aerodynamic flows, reduce drag resistance and mitigate noise generated by wing tip vortices. Vortex generators are connected to aircraft wings specifically at the top of the wing or extrados.

However, the document is limited to describing the installation of vortex generators in the extrados of the wing of an aircraft. By having the vortex generators in the extrados of the wing of an aircraft would have a different technical effect to the one proposed by the invention since the extrados corresponds to the convex area of an aerodynamic profile.

On the other hand, US20160177914A1 discloses a vortex generator, specifically designed and connected to the rotor blades of a wind turbine. The vortex generator is located on the suction side (low pressure) of the rotor blade, that is, on the extrados. The vortex generator seeks to generate a second vortex which reduces drag resistance. However, the document is limited to describing the use of vortex generators in the blades of a rotor of a wind turbine that allows to re-energize the boundary layer in the low pressure zone, therefore, the desired technical effect is different to the one proposed by the present invention.

### Brief Description of the Invention

The present invention corresponds to a device for deflecting and decelerating a flow comprising a deflector surface, a support structure connected behind the deflector surface and a vortex generator connected on the deflector surface, where the vortex generator generates two flow zones turbulent, a first low pressure zone below the vortex generator and a second high pressure zone above the vortex generator, and where the deflector surface is concave in the direction of the incident flow, and the vortex generator is on the concave part.

### Brief description of the figures

- FIG. 1 corresponds to a mode of the device in isometric view.
- FIG. 2 corresponds the lateral view of the device showing the height of the device and the elements that compose it.
- FIG. 3 corresponds to a mode where the deflecting surface (1) has panels (10).
- FIG. 4 corresponds to a vortex generator mode (3).
- FIG. 5 corresponds to a mode of the deflecting surface (1) and the vortex generator (3) with a first end plate (8) and a second end plate (9).
- FIG. 6 corresponds to an embodiment of the deflecting surface (1) and the vortex generator (3) without the first end plate (8) and the second end plate (9).
- FIG. 7 corresponds to a CFD simulation with an incident flow at the time of impact with the deflecting surface (1).
- FIG. 8 corresponds to a CFD simulation of the incident flow deviation when leaving the device.
- FIG. 9 corresponds to a CFD simulation in a side view of the incident flow evidencing the beginning of the interaction between the incident flow and the device.
- FIG. 10 corresponds to a CFD simulation in a side view evidencing the evolution of the interaction of the incident flow with the device.

### Detailed description of the invention.

The present invention corresponds to a device for deflecting and decelerating a flow, hereafter referred to as a device.

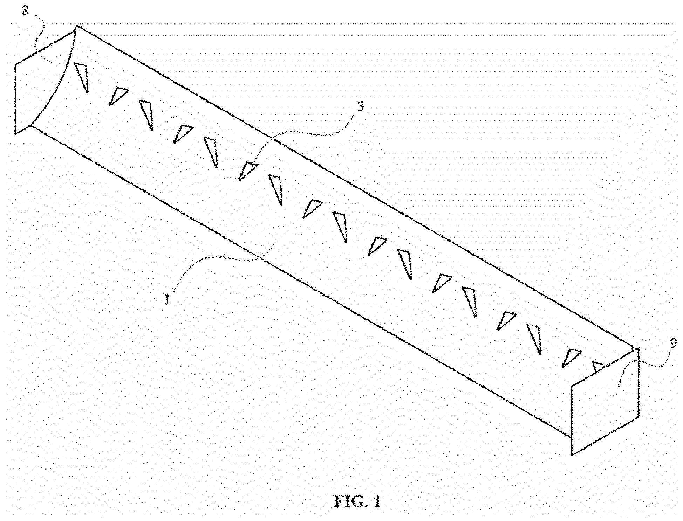

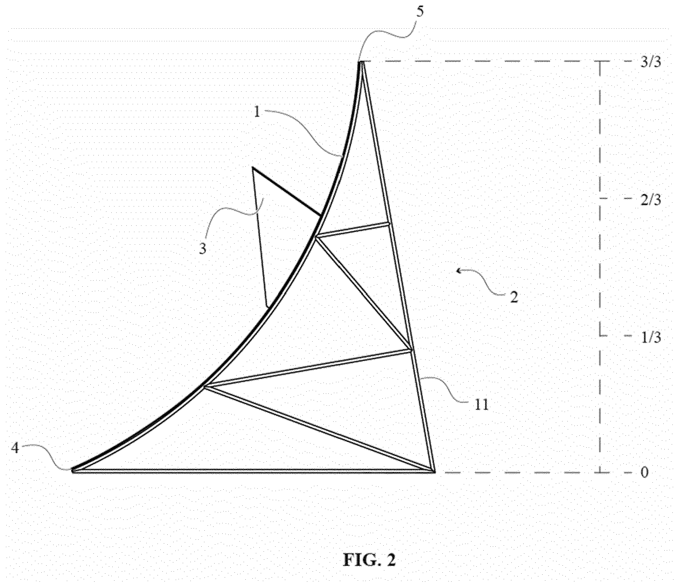

Referring to FIG. 1 and FIG. 2, the device comprises:
- deflecting surface (1);
- a support structure (2) connected behind the deflecting surface (1);
- and
- one vortex generator (3) connected on the deflecting surface (1).

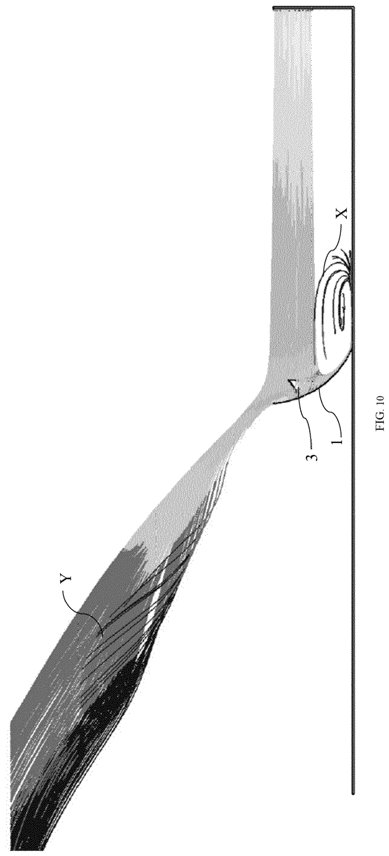

Referring to FIG. 10, the vortex generator (3) generates two turbulent flow zones, a first low pressure zone (X) below the vortex generator (3) and a second high pressure zone (Y) above the vortex generator (3) where the deflecting surface (1) is concave in the direction of the incident flow, and the vortex generator (3) is on the concave portion.

Some of the objectives of the present invention are: to reduce the impact of the flow from a turbine or high energy flows from elements or machines, reduce the space necessary for the flow to decelerate without affecting the people and objects that surround, and in the worst case, prevent the flow can be deadly for people transiting behind the flow. This because the flow can transform small bodies like stones, small traces of wear and tear of machinery or similar into projectiles.

The present invention can be installed in airports for regional, international flights, airfields and aircraft carriers, test zones and workshops where the high velocity flow of turbines and propellers or other propulsion unit have effects on the environment.

Depending on the type of airport or the type of aircraft traveling in it, the size of the device is determined, what must be taken into account is: the speed of the incident flow, the temperature of the incident flow, the size of the aircraft, the distance to which the deflector aircraft will be located and the maximum admissible size applicable to obstacles that obstruct the limited surfaces of the approach and transition zones according to the ICAO (International Civil Aviation Organization) aeronautical standards, part 14.

In one embodiment of the invention, the deflecting surface (1) is of a material selected from the group of metallic materials including ferrous and nonferrous alloys, concrete, reinforced concrete, composite polymer matrix, equivalent materials that are known by a person moderately versed in the subject or combinations of the above.

The deflecting surface (1) is made of steel with carbon due to its low purchase costs. Also, the availability of this material, it is simple subjecting to a heat treatment, a mechanical treatment, a surface treatment or a chemical treatment.

Also, the deflecting surface (1) has a heat treatment selected from temple, tempering, annealing, normalizing, thermochemical treatments, heat treatments equivalent are known to one of ordinary skill in the art or combinations thereof. In one embodiment of the invention, the deflecting surface (1) has a heat treatment by tempering temple more specifically and an increase in hardness and strength. In a method of the invention, the deflecting surface (1) has a mechanical treatment that impact resistance by plastic deformation.

Moreover, the deflecting surface (1) has a coating selected from electrostatic painting epoxy or polyester, zinc, ceramic materials deposited chemically or physically by steam, anodized, tropicalized sintered ceramic coating, equivalent coatings that are known to one moderately versed in the matter or combinations of the above. In one embodiment of the invention, the deflecting surface (1) has a zinc coating over a coating of electrostatic epoxy paint, allowing a better corrosion protection, the use of zinc makes easier the use of welding with other elements also zinc coated prior to application of the epoxy electrostatic painting.

The deflecting surface (1) has a calculated length depending on the type of airport and depending on the type of aircraft departing from that airport. In one embodiment of the invention has a length between 1m to 200m selected, or a greater distance than the size of an aircraft category A, B, C, D or E according to the classification established by ICAO aircraft.

Also, the deflecting surface (1) has a height calculated depending on the type of aircraft taking off, operate or perform engine tests at the airport. In one embodiment of the invention, it has a height selected between 0.5m and 7m, or a distance greater than the height between the ground and the propeller assembly of an aircraft. In one embodiment of the invention, the height of the deflecting surface (1) is 6m, which is a distance greater than the distance between the ground and the projected axis of the center of the propeller assembly of a typical category D or E aircraft according with the classification of aircraft established by ICAO.

It will be understood in the present invention, that motor tests correspond to propeller assembly tests.

Moreover, the deflecting surface (1) has a thickness calculated depending on the type of flux incident producing aircraft, the reason for this is that each flow rate exerts a different thrust. In one embodiment of the invention, it has a thickness selected between 0.5mm to 30mm.

The contour described by the deflecting surface (1) is obtained as a section of the Fibonacci spiral. The reason why the Fibonacci spiral was chosen as preferred form of construction of the deflecting surface (1) is because in a geometry that allows re-direct incident flow and slow.

It will be understood in the present invention, the deflecting surface (1) has a concave shape. Preferably, the deflecting surface (1) is concave along the Fibonacci spiral.

In one embodiment of the invention, the deflecting surface (1) can be manufactured from metal plates joined together by welding (eg SMAW, GMAW, GTAW, FCAW, and equivalent welds that are known to a person moderately versed in the field and welding methods accepted by the American Welding Society).

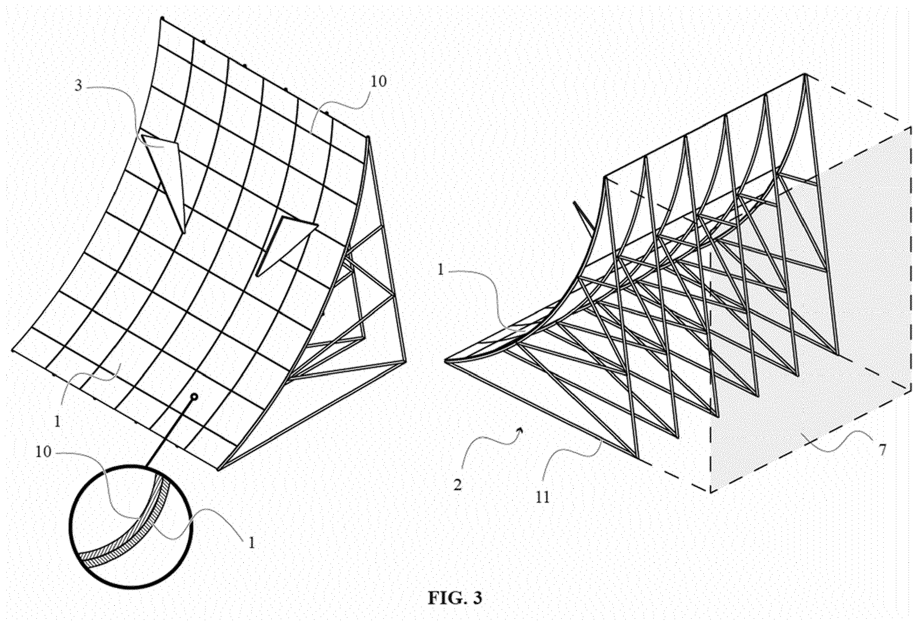

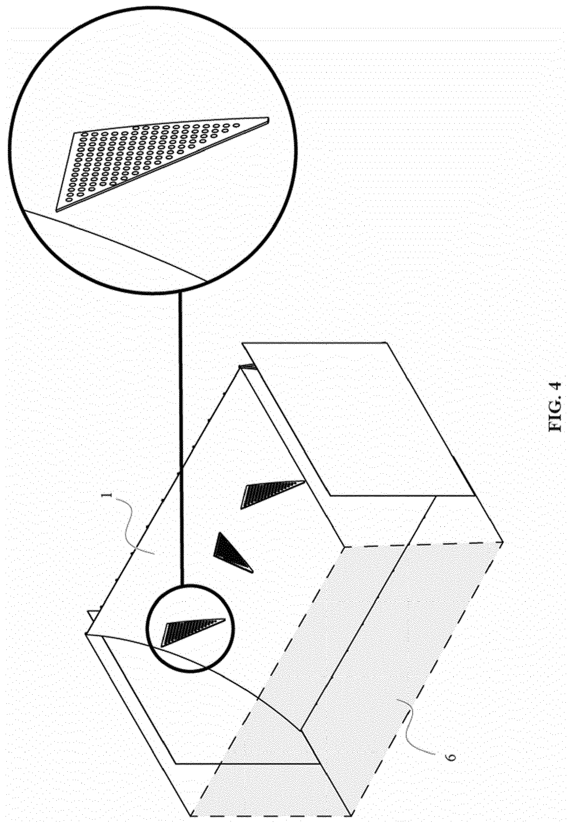

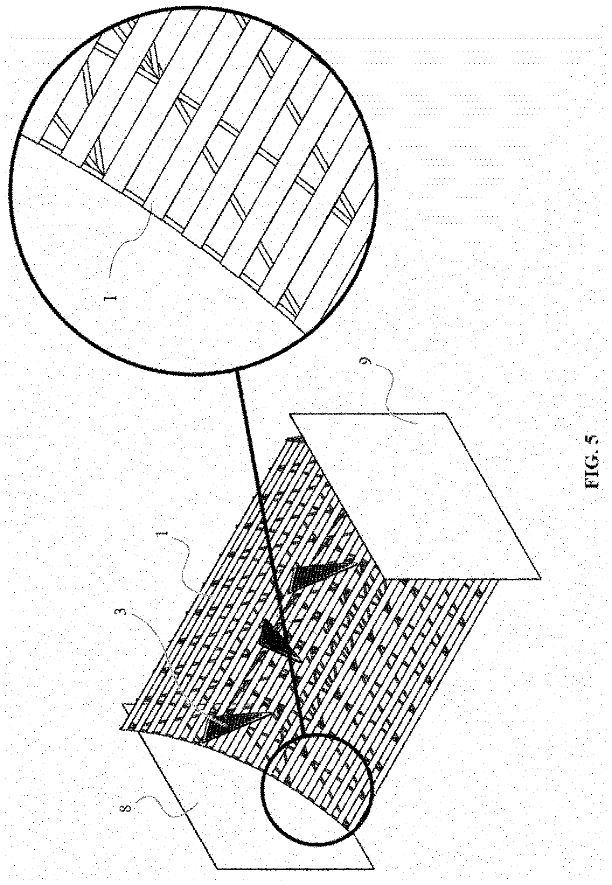

Referring to FIG. 2, to FIG. 3, to FIG. 4, and FIG. 5, in one embodiment of the invention, the deflector surface (1) comprises an leading edge (4) near a ground surface, an exit edge (5) at the upper end of the deflector surface (1) above the leading edge (4) and parallel the leading edge (4). In the side ends of the deflecting surface (1) has a first end plate (8) and a second end plate (9), the first end plate (8) is located from the leading edge (4) to a height between the second third and third third of the deflecting surface (1), the second end plate (9) opposite the first end plate (8) and located from the leading edge (4) to a height between the second third and third third of the deflecting surface (1). Therefore, when observing the device from a front view, the two edges and the two end plates indicated above describe an area which is called the front area (6), and when observing the device from a rear view, the two edges and the two end plates (8, 9) mentioned above describe an area which is called rear area (7). Front area (6) corresponds to the area in which incident flow at least one turbine, or any other propellant, contact the deflecting surface (1). The rear area (7), is an area intended for placing a support structure (2) for holding or carrying the deflecting surface (1) which will be explained later. For the operation of the device, the leading edge (4) is arranged on the floor or surface that serves as the floor. It will be understood in the present invention that end plates are generally flat structures.

It is understood in the present invention that the end plate is an aerodynamic body which reduces the edge effects.

The leading edge (4) corresponds to the total length of the device, just as the exit edge (5) corresponds to the total length of the device. The separation distance between the leading edge (4) and the exit edge (5) correspond to the total height of the device.

In one embodiment of the invention, the length of the leading edge (4) is greater or less than the length of the exit edge (5) depending on the desired structural configuration.

The first end plate (8) and the second end plate (9) are constructed with the same material deflecting surface (1). The length of the first end plate (8) and the second end plate (9) correspond to the width calculated from the deflecting surface (1), in one embodiment of the invention the first end plate (8) and the second end plate (9) they have different lengths to the calculated width. Also, the first end plate (8) and the second end plate (9) having a thickness equal to that of the deflecting surface (1).

When observing the device from a top view, the first end plate (8) and the second end plate (9) describe an angle with respect to the leading edge (4) and the exit edge (5). The described angle is selected between 30 ° to 150 °.

Preferably, the first end plate (8) and the second end plate (9) is located at 90 °, which has an effect on the incident flux of one or more turbines or propeller assembly, making the flow is directed towards the area front (6) allowing the flow to be deflected by the first end plate (8) and the second end plate (9) into the deflecting surface (1) allowing it to be deflected. Furthermore, the objective of the first end plate (8) and the second end plate (9) is to prevent the sides of the deflecting surface (1) vortices are generated which may affect the path of passers future or at worst, parked aircraft.

Referring to FIG. 3, in one embodiment of the invention, the deflecting surface (1) panels (10) are arranged on the entire surface. With these panels (10) the noise produced by a propeller assembly is reduced. The panels (10) are constructed of an acoustic absorbent material selected from porous materials, resonant materials, absorbent materials in the form of a panel or membrane and equivalent materials that are known by a person moderately versed in the matter or combinations of the foregoing.

It will be understood in the present invention that the use of porous materials reduces the sound by absorbing its energy, the more porous the material the more sound it manages to absorb, as well as its density, the denser the material is, the greater the absorption. The average densities of these porous materials range between 5kg / m3 and 1000kg / m3. The thickness of the material also depends on how much sound you want to absorb, the more thickness the greater the absorption.

Preferably, the panels (10) are constructed of a porous material, which comprises mineral wool (e.g. rock wool and glass wool), synthetic fibers, natural fibers, open cell foams, equivalent porous materials known by a person moderately versed in the subject or combinations of the above. Even more preferably, the panels (10) are constructed of a porous material such as expanded high density polyurethane. This polymeric material is easy to manufacture, low cost and due to its density, it allows the sound to be absorbed very well.

It is of note that, depending on the intensity of the noise produced by the reached or an aircraft propulsion unit, the thickness of the panels (10) is calculated in order to reduce the intensity of noise. For example, a typical category D or E aircraft in full takeoff produces a noise of approximately 120 decibels, therefore, it is sought to generate a noise intensity reduction between 5% and 30%, knowing that the pain threshold It is 120 decibels. Having intensities above 85 decibels can affect the ear and is classified as the permissible limit value (VLP).

In one embodiment of the invention, the shape of the panels (10) has a geometry selected from rectangular, square, regular, irregular geometry or combinations of the foregoing.

Likewise, the panels (10) have a roughness following the DIN ISO 1302: 2002 standard. This standard classifies the surfaces of an element according to its function, for example, the functional surface, the support surface and the free surface, where the panels (10) can be considered as functional surface because its surface is in contact Direct with the incident flow and the roughness can generate an adhesion of the boundary layer of the flow that can alter the overall aerodynamic behavior.

Given the above, the roughness according to the standard is selected from N1, N2, N3, N4, N5, N6, N7, N8, N9, N10, N11 and N12. Preferably the roughness of the panels (10) is N6 because this surface roughness prevents undesirable aerodynamic effects.

The number of panels (10) on the deflecting surface (1) is selected from 2 panels to 200 panels. The number of panels (10) will depend on the dimensions of the device. Preferably, the number of panels (10) is 140 panels is that the panels may be enlarged depending on the height and width of the deflecting surface (1).

In one embodiment of the invention, the panels (10) are fixed to the deflecting surface (1) by attachment means selected from screws, bolts, nuts, studs, pins, wedges, clamps, adhesives, equivalent means of fastening which are known by a person moderately versed in the subject or combinations of the above. Preferably, the panels (10) are fixed to the deflecting surface (1) by bolts because these panels allow to disassemble for maintenance.

The panels (10) have the following characteristics:
- a width selected from 0.3m, 0.5m, 1m, 1.5m, 2m and 3m;
- a high selected between 0.3m, 0.5m, 1m, 1.5m, 2m and 3m.
Preferably the length of the panels (10) is 1.2m wide and 2.4m high.

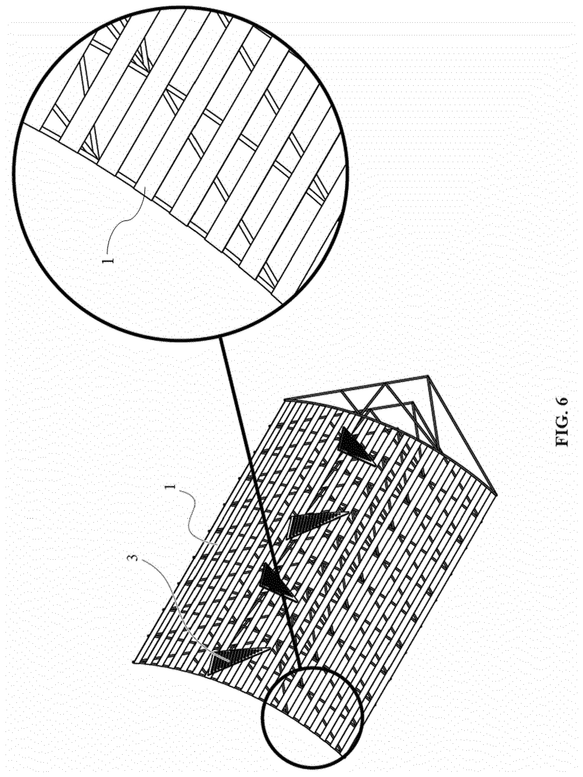

Referring to FIG. 5 and FIG. 6, in one embodiment of the invention, the deflecting surface (1) having through holes along its surface. The perforations have a shape selected from circular, square, rectangular, regular shapes, irregular shapes or combinations thereof. Preferably, the through holes of the deflecting surface (1) have a rectangular shape, which allows to increase the effectiveness of the de-energization of the incident flow by a pressure relief controlled in the deflecting surface (1).

In an embodiment not shown, the through holes are preferably located between the first third and third third of the height of the deflecting surface (1). This in order that the pressure relief occurs in areas of the deflecting surface (1) which is more effective and additionally prevent flow energy below the first third so that they can move people and small cars.

Referring to FIG. 2, the support structure (2) is connected behind the deflecting surface (1).

The support structure (2) is of a material that is selected from the group of metallic materials between ferrous and non-ferrous alloys, concrete, reinforced concrete, polymer matrix composite materials, equivalent materials that are known by a person moderately versed in the subject or combinations of the above. Preferably the support structure (2) is constructed in structural steel due to its low cost and high strength.

Also, referring to FIG. 3, the support structure (2) is characterized by a plurality of structural members (11) joined. The cross section of the plurality of structural members (11) is selected from the group of round cross sections, rectangular cross sections, square cross sections, elliptical cross sections, regular and irregular cross sections. Preferably, the cross section of the plurality of members is circular because members of this cross section have good flexural rigidity, torsional rigidity and good axial symmetry present which makes good bending to support the same amount in either direction.

Also, the plurality of structural members (11) has a selected thickness between 1mm a10mm other structural members are closed and hollow.

In one embodiment of the invention, the support structure (2) is located in the rear area (7) of the deflecting surface (1).

The support structure (2) is fixed to the leading edge (4) and to the exit edge (5) by means of fasteners selected from screws, bolts, nuts, studs, pins, wedges, clamps, equivalent fixing means whatever known by a person moderately versed in the subject or combinations of the above. Preferably, they are fixed together by bolts and screws because they provide the possibility of making a frangible design against aircraft impacts with greater reliability than other fasteners and, additionally, facilitate assembly and disassembly. A frangible design ensures that upon impact of an aircraft, the device is less rigid than the aircraft it hits and misses in a controlled manner.

Likewise, with the plurality of structural members (11), the plurality of structural members (11) are joined by means of fasteners or fasteners. The fasteners are selected from screws, bolts, nuts, rivets, studs, pins, wedges, clamps, equivalent elements that are known by a person moderately versed in the subject or combinations of the above. Also, the structural members can be joined by welding (e.g. SMAW, GMAW, GTAW, FCAW, and equivalent welds that are known to a person moderately versed in the subject and welding methods accepted by the American Welding Society).

In one embodiment of the invention, the structural members (11) are anchored to the floor, so that they transfer the loads thereto, also including the thrust force exerted by the propellant assemblies of an aircraft. The ways of anchoring the structural members to the ground are selected from bar anchors, cable anchors, expansive anchors, chemical injection anchors, equivalent anchors that are known by a person moderately versed in the matter or combinations of the above. Preferably, the structural members (11) are anchored to the ground by anchors chemical injection, they allow structural members efficiently block three translations and the three rotations.

In one embodiment of the invention, the structural members (11), specifically at the end directed to the floor, are supported by a rail (e.g. rails where the wheels of trains and trams are moved). This, in order that the device is mobile and transportable at will anywhere in the airport, or where needed to mitigate noise or the effects of jet turbines or any other propellant.

The support structure (2) has the following characteristics:
- a high calculated and selected according to the height of the deflecting surface (1), the highest is selected from 0.50m to 7m.
- a long calculated and selected according to the length of the deflecting surface (1), the length selected from 1m to 200m. Preferably, the length of the support structure (2) is 64m.

Referring to FIG. 2, the vortex generator (3) is disposed on the deflecting surface (1).

The vortex generator (3) is made of a material that is selected from the group of metallic materials between ferrous and non-ferrous alloys, concrete, reinforced concrete, polymeric matrix composites, equivalent materials that are known by a person moderately versed in the field. or combinations of the above. Preferably the vortex generator (3) is made of carbon steel with zinc protection plus a coating in epoxy electrostatic paint.

The vortex generator (3) is built in carbon steel due to its low acquisition costs and high strength. Also, this material can be subjected to a heat treatment, a mechanical treatment, a surface treatment or a chemical treatment.

Also, the vortex generator (3) has a heat treatment selected from quenching, tempering, annealing, normalizing, thermochemical treatments, heat treatments equivalents which are known to a person of ordinary skill in the art or combinations thereof. In one embodiment of the invention, the vortex generator (3) has a heat treatment by quenching more tempering allowing an increase in hardness and mechanical strength.

Moreover, the vortex generator (3) has a coating selected from electrostatic painting epoxy or polyester, zinc, ceramic materials chemically or physically deposited by steam, anodized, tropicalized sintered ceramic coating, equivalent coatings that are known to a person moderately versed in the matter or combinations of the above. In one embodiment of the invention, the vortex generator (3) has a zinc coating over a coating of electrostatic epoxy paint, allowing a better corrosion protection, the use of zinc makes easier the use of welding with other elements also coated with zinc prior to application of the epoxy electrostatic painting.

In one embodiment of the invention, the vortex generator shape (3) is selected from regular shapes, irregular shapes, isosceles triangle shapes, equilateral triangle shapes, right triangle shapes or combinations of the above. Preferably, the shape of the vortex generator (3) is triangular.

The vortex generator (3) is arranged in the deflecting surface (1) by fasteners or fasteners. The fasteners are selected from screws, bolts, nuts, rivets, studs, pins, wedges, clamps, equivalent elements that are known by a person moderately versed in the subject or combinations of the above. Also, the vortex generator (3) is connected to the deflecting surface (1) by welding (eg SMAW, GMAW, GTAW, FCAW, and equivalent welds that are known by a person moderately versed in the subject and welding methods accepted by the American Welding Society).

In one embodiment of the invention, the vortex generator (3) has a length (base length) selected from 0.1m to 1.5m. Preferably, the length is linked to the height of the device, therefore it can be said that for a device height of 6m, the length of the vortex generator (3) is 1m.

Referring to FIG. 2, the base of the triangle of the vortex generator (3) is in contact with the deflection surface (1).

In another embodiment of the invention, the base of the triangle of the vortex generator (3) is in contact with the panels (10).

Also, the top of the vortex generator (3) is selected from 0.05m, 0.5m. Preferably, the high length is linked vortex generator therefore can be said that for a length of vortex generator (3) of 1m, the height of the vortex generator (3) is 0.3m.

Also, the thickness of the vortex generator is selected from 1mm to 12mm. Preferably, the vortex generator (3) has a thickness of 3mm, to the availability of this thickness allows the vortex generator (3) have a greater resistance to the aerodynamic loads imposed by the incident flow.

Referring to FIG. 2, in one embodiment of the invention, the vortex generator (3) is located between the first third and third third of the deflecting surface (1).

In one embodiment of the invention, the vortex generator (3) is located at an angle between 0 ° to 180 ° with respect to the leading edge (4). Preferably, the vortex generator (3) is located at 45 ° with respect to the leading edge (4). Depending on the type of aerodynamic effect to be induced on the incident flow, the angle of the vortex generator (3) is varied, tilting it towards the leading edge (4) and reducing the angle.

In one embodiment of the invention, the amount of vortex generators (3) is selected from 1 to 500 units. Preferably, the number of vortex generators (3) is 17 units.

In one embodiment of the invention, the vortex generator (3) has perforations, which have a shape selected from circular shapes, rectangular shapes, elliptical shapes, regular shapes, irregular shapes or combinations thereof. Preferably, the vortex generator (3) having a circular throughbore, this allows, by controlled pressure relief, will modify the form of vortices generated so that possible alter the overall aerodynamic performance of the device.

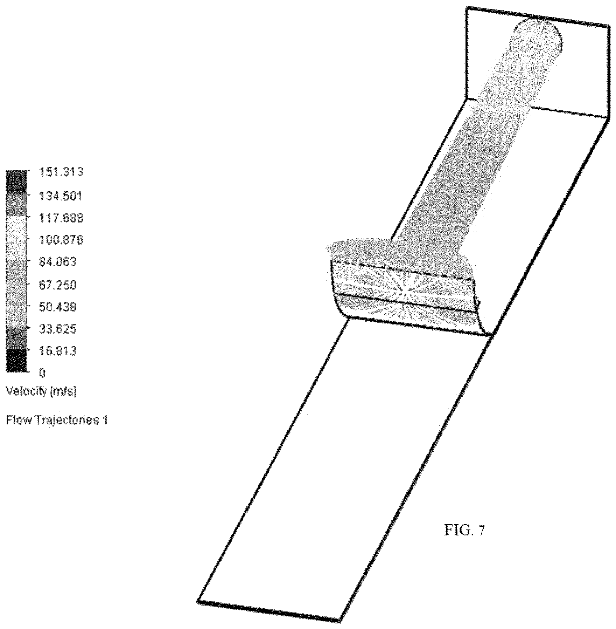

Referring to FIG. 7, it will be understood in the present invention, that the flow from at least one turbine is a turbulent flow with great energy. Where the blue color is the minimum speed in m / s and the red color is the maximum speed of the turbine flow also in m / s.

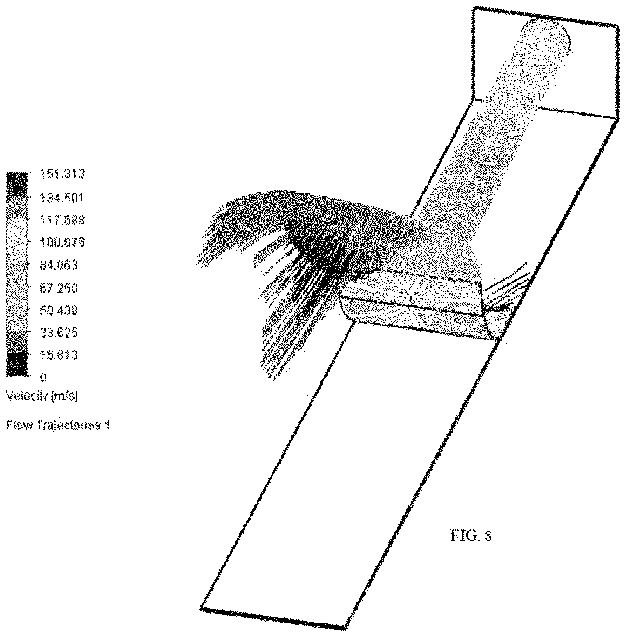

Referring to FIG. 8, the flow behavior from at least one turbine is observed from an isometric view, where the blue color is the minimum speed in m / s and the red color is the maximum speed of the turbine flow, also in m / s .

Referring to FIG. 10, in one embodiment of the invention, the vortex generator (3) generates two turbulent flow zones, a first low pressure zone (X) below the vortex generator (3) and a second high pressure zone (Y) above the vortex generator (3) and wherein the deflecting surface (1) is concave in the direction of the incident flow, and the vortex generator (3) is on the concave portion.

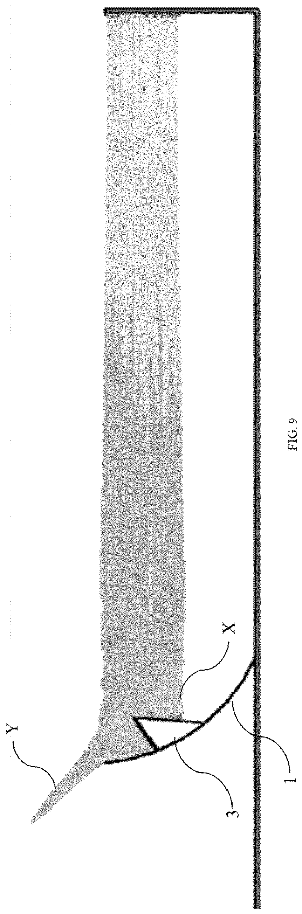

Referring to FIG. 9, in one embodiment of the invention, at the moment that the flow from at least one turbine falls on the device, it allows the flow to ascend through the deflector surface (1), then interacts with the vortex generator (3) generating two turbulent zones, a first zone of low pressure (X) and a second zone of high pressure (Y), the flow when passing through the vortex generator (3) generates vortices which ascend with an angle of inclination greater than that of the deflector surface (1).

The device is designed and calculated to withstand thrust forces between 100kN to 480kN.

It will be understood in the present invention, that the device can be calculated and manufactured for any type of aircraft regardless of whether it has 2 turbines, 3 turbines, 4 turbines or 6 turbines or any other propeller assembly.

These magnitudes of thrust forces depend on the type of propellant, for example, turbofan engines, jet engines, piston engines, turbine engines, turboprops, turbojet, and equivalent thrusters that are known to a person moderately skilled in the art.

For the understanding of the present invention, CFD stands for Computational Fluid Dynamics, which is a simulation program widely used by engineers to conduct fluid studies and its behavior in different static bodies as well as with moving bodies.

*Example 1. Manufacture of a device to deflect and decelerate a flow.* A device to deflect and decelerate a flow in an airport was designed, calculated, simulated and validated experimentally in a wind tunnel model.

The deflecting surface (1) follows the Fibonacci spiral, and wherein the deflecting surface (1) has the following characteristics:
- material: carbon steel;
- treatment: thermo-mechanical;
- Type of coating: zinc plus epoxy electrostatic paint;
- shape: concave towards the incident flow;
- Length: 64m, which is equivalent to the size of a typical category D or E aircraft according to the classification of aircraft established by ICAO.
- high: 6m;
- width: 7.7m;
- thickness: 1.5mm

The support structure (2) has the following characteristics:
- plurality of structural members (11) with the following characteristics:
   - material: carbon steel;
   - thermo-mechanical treatment;
   - type of coating: zinc plus epoxy electrostatic paint.
   - hollow circular cross section;
   - thickness: 2.5mm;
   - length: 54m;
   - high: 6m;
   - fixing means between the support structure (2), the leading edge (4) and the exit edge (5): screws, bolts and nuts;
   - fixing means between the plurality of structural members (11): screws, bolts, nuts and structural clamps;
   - fastening means between the plurality of structural members (11) and the ground: chemical injection anchors and expansive anchors.

The vortex generator (3) has the following characteristics:
- material: carbon steel;
- thermo-mechanical treatment;
- type of coating: zinc plus epoxy electrostatic paint.
- geometry of the vortex generator: triangular;
- fixing means between the vortex generator and the deflecting surface (1): welding;
- length: 1m;
- height: 30cm;
- thickness: 3mm,
- location: it is located between the second third and the third third of the height of the device, assuming zero distance from the ground;
- Location angle of the vortex generator: 45 ° with respect to the leading edge (4);
- number of generators: 17 units.

The device must be located at a minimum distance of 15 meters from the aircraft, this distance is for a Boeing 747-400.

It should be understood that the present invention is not found limited to the embodiments described and illustrated, nor limited to aircraft and airports, because as will be apparent to one skilled in the art, variations and possible modifications that do not depart from the spirit of invention which is only defined by the is following claims.

## Claims

1. A device to deflect and decelerate a flow characterized wherein comprising:
- deflecting surface (1);
- a support structure (2) connected behind the deflecting surface (1);
- one vortex generator (3) connected on the deflecting surface (1); and
- where the vortex generator (3) generates two turbulent flow zones, a first low pressure zone (X) below the vortex generator (3) and a second high pressure zone (Y) above the vortex generator (3) and wherein the deflecting surface (1) is concave in the direction of the incident flow, and the vortex generator (3) is on the concave portion.

2. The device of Claim 1 characterized wherein the vortex generator (3) is located between the first third and third third of the deflecting surface (1).

3. The device of claim 1, characterized wherein the deflecting surface (1) comprises:
- a leading edge (4) close to a ground surface;
- an exit edge (5) at the upper end of the deflecting surface (1) above the leading edge (4) and parallel to the leading edge (4); and
- a front area (6) between the leading edge (4) and the exit edge (5); and
- a rear area (7) positioned behind the exit edge (5).
- a first end plate (8) is located from the leading edge (4) to a height between the second third and the third third of the deflecting surface (1);
- a second end plate (9) opposite the first end plate (8) and which is located from the leading edge (4) to a height between the second third and the third third of the deflecting surface (1).

4. The device of Claim 3, characterized wherein the vortex generator (3) is located at an angle between the range of 0 ° and 180 ° with respect to the leading edge (4).

5. The device of Claim 1, **characterized in that** the vortex generator profile (3) is selected from the group of regular profiles, irregular profiles, isosceles triangle profiles, equilateral triangle profiles or combinations of the above.

6. The device of claim 1, **characterized in that** the vortex generator profile (3) has through holes.

7. The device of Claim 6, **characterized in that** the through holes in the vortex generator profile (3) have a shape selected from circular shapes, rectangular shapes, elliptical shapes, regular shapes, irregular shapes or combinations of the foregoing.

8. The device of Claim 3, **characterized in that** the first end plate (8) and the second end plate (9) are located at an angle between the range of 30 ° and 150 ° with respect to the leading edge (4) and the exit edge (5) forming a polygon with the leading edge (4) and the exit edge (5).

9. The device of Claim 1, characterized wherein the profile of the curvature of the deflecting surface (1) is obtained as a segment string of a Fibonacci spiral.

10. The device of claim 1, characterized wherein on the deflecting surface (1) panels (10) are arranged on the entire surface.

11. The device of Claim 10, characterized wherein at least one panel of the panels (10) is constructed of an acoustically absorbent material.

12. The device of claim 10, characterized wherein the shape of the panels (10) can be selected from rectangular, square, regular geometry, irregular geometry or combinations thereof

13. The device of claim 10, characterized wherein the panels (10) have a surface finish selected from N1 to N12 roughness or combinations thereof.

14. The device of claim 1, characterized wherein the material of the support structure (2) is selected from the group of metallic materials including ferrous and nonferrous alloys, concrete, reinforced concrete, composite materials polymer matrix or combinations thereof.

15. The device of Claim 1, **characterized in that** the support structure (2) transfers the loads to the ground.

16. The device of claim 1, characterized wherein the support structure (2) is a plurality of structural members (11) connected to each other from the leading edge (4) to the exit edge (5) behind the deflecting surface (1).

17. The device of claim 1, characterized wherein comprising through holes arranged along the deflecting surface (1).

18. The device of claim 17, characterized wherein the through holes have circular, square, rectangular, regular shapes, irregular shapes or combinations thereof.

19. The device of claim 17, characterized wherein the through holes are located between the first third and third third of the deflecting surface (1).
